(19) Europäisches Patentamt / European Patent Office / Office européen des brevets

(11) **EP 2 962 578 A1**

(12) **EUROPEAN PATENT APPLICATION**

(43) Date of publication:
06.01.2016 Bulletin 2016/01

(51) Int Cl.:
A23L 1/29 (0000.00)    B65D 75/32 (2006.01)
A61J 1/03 (2006.01)    G09B 19/00 (2006.01)

(21) Application number: 14175052.1

(22) Date of filing: 30.06.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicants:
• **Verheesen**
  **Richard Hubertus**
  **5685 BW Best (NL)**

• **Sense 4 Health B.V.**
  **5685 BW Best (NL)**

(72) Inventor: **Verheesen, Richard Hubertus**
  **5685 BW Best (NL)**

(74) Representative: **Doolaar, Frans**
  **Inaday Patent B.V.**
  **Hengelosestraat 141**
  **7521 AA Enschede (NL)**

(54) **Method of providing a plurality of nutrition portions to a user and packaging product**

(57) The invention relates to a method of providing a plurality of daily nutrition portions to a user comprising the steps of:
- packing a first nutrition portion comprising a first quantity of a nutrient;
- packing a second nutrition portion comprising a second quantity of the nutrient;
- subsequently releasing the first nutrition portion and the second nutrition portion;

The method comprises arranging that the first quantity and the second quantity differ in an arbitrary way.

Fig. 1

**Description**

The invention relates to a method of providing a plurality of daily nutrition portions to a user comprising the steps of:

- packing a first nutrition portion comprising a first quantity of a nutrient;
- packing a second nutrition portion comprising a second quantity of the nutrient; and
- subsequently releasing the first nutrition portion and the second nutrition portion.

The invention also relates to a packaging product.

EP1207850 discloses blister packs comprising predetermined areas with recesses for dosage units of biologically active substances. The predetermined areas are arranged in columns and rows. In a predetermined area with a time indicium AM there are a first recess with a first dosage unit and a second recess with a second dosage unit. The first dosage unit and the second dosage unit contain an uneven amount of vitamin A, B vitamins, vitamin C, iodine or other chemical agents. Although the first and the second dosage units are within the same predetermined area and therefore have the same time indicium, they are in separate recesses. They are in separate recesses because there exists a storage incompatibility between the first dosage unit and the second dosage unit. The storage incompatibility exists because the first and second dosage units cannot be formulated in a single dosage unit or stored together in direct contact to prevent interaction in a negative manner. Storage incompatibility can also exist because when the dosage units within one predetermined area would not be separate but joined, the total of the dosage amounts in the dosage units would result in a single dosage unit which is difficult to swallow or at least not optimal for swallowing. Storage incompatibility may also exist when one dosage unit comprises a prescription substance and the other a non-prescription substance.

Although the dosage units within a predetermined area are separated, the amount of vitamin A or C, vitamins B, iodine or other chemical agents of the two dosage units in one predetermined area is to be taken together as indicated by the time indicium. Therefore, for the amount of the chemical agents taken in at the time of the time indicium the separation has no effect.

In another part, EP1207850 also discloses blister packs comprising predetermined areas with recesses for dosage units of biologically active substances. The predetermined areas are arranged in columns and rows. In each of the predetermined areas in a first column, which has AM as time indicium, there are a first recess with a first dosage unit and a second recess with a second dosage unit.

Although the first and the second dosage units are within the same predetermined area and therefore have the same time indicium, they are in separate recesses for any of the storage incompatibility reasons as described above.

The blister also comprises a second column of predetermined areas. The second column has PM as time indicium. The predetermined areas in the second column also comprise a first dosage unit. Each first dosage unit of the predetermined areas in the first column contains another amount of a biologically active substance than a second predetermined area in the second column having a time indicium PM.

Depending on the amount of a chemical agent (forming the biologically active substance) in the second dosage units in the first column or the second column, the amount of a chemical agent used at different indicated times within a day is varied.

Vitamin tablets are readily available in the market. They are taken to supplement the vitamin intake via normal nutrition. In a known example the vitamin tablets are sold in small bottles with a screw cap. The tables each contain several different vitamins. In the known example, each tablet comprises 1.1 mg of vitamin B1, which corresponds to 100% of the advised daily quantity. Each tablet also comprises 80 mg of vitamin C, which corresponds to 75% of the advised daily quantity. The tablets comprise more vitamins (such as vitamins D) and also other food supplements such as calcium, iodine, copper, molybdenum and iron. The bottles comprise a label advising to take 1 or 2 tablets each day and are advised for scholars from 10 years and older. By taking 1 or 2 tablets each day, there is a minimum amount of vitamin B1 and vitamin C that is offered to the digestion system of a person.

As the tablets are supplements to the normal nutrition, the total quantity of vitamin B1 and vitamin C taken by a user over a period of time is not fixed because the quantity of vitamin B1 and C will vary with the nutrition. This variation corresponds to variation in the nutrition taken besides the tablets and therefore on the person, his habits and likings so that the variation may be smaller for one person and larger for another person.

It is an object of the invention, to provide a method of providing a plurality of daily nutrition portions to a user that improves the quantity of the nutrient used per day for the human or animal body.

According to an embodiment of a first aspect of the invention, there is provided a method of providing a plurality of daily nutrition portions to a user comprising the steps of:

- packing a first nutrition portion comprising a first quantity of a nutrient;
- packing a second nutrition portion comprising a second quantity of the nutrient;
- subsequently releasing the first nutrition portion and the second nutrition portion;
- characterized by arranging that the first quantity and the second quantity differ in an arbitrary way.

The inventor realised that the human body encounters different challenges every day because a human performs different actions every day and therefore demands the human body to perform different actions. Therefore, the human body needs to adapt. The human body functions because there are many chemical reactions taking place in it. Such a reaction can for example be expressed as

$$pA + qB \rightleftharpoons rC + sD$$

In this reaction chemical A reacts with chemical B to form chemical C and chemical D. The relative quantities used and formed are indicated by p, q, r and s. Chemical reactions have an equilibrium which can be influenced by the concentrations of the chemicals A, B, C and D. For instance, chemical A can be a nutrient and chemical B can be formed in the human body as a result of other reactions. Chemical B is also used by other reactions. If a high amount of nutrient A is taken daily via nutrition portions, this means that the chemical reaction shifts to the right side and relatively high concentrations of chemical C and chemical D is formed. This also means that more of chemical B is used and the concentration of chemical B decreases.

As the human body faces different demands, it may require different concentrations of chemical B to be present daily. On the other hand, the human body also adapts to a daily high concentration of chemical A leading to high concentrations of chemicals C and D. For instance an organ that also produces chemical D may become less effective. This is because parts of the human body that are not used, are often decreased in size or their capacity is otherwise limited.

Therefore, when the demand on the human body is such that a relatively high amount of chemical B is used by another chemical reaction, the concentration of chemical D may become too low for optimal functioning.

The analogue holds for animal bodies and the skilled man will appreciate that a human is a mammal species.

Because the amounts of the nutrient may differ between the first and the second nutrition portions and those nutrition portions are for different days, when a user (human or animal) uses the packaging product produced by the method, the quantity of the nutrient may differ between the first day and the second day.

Obviously, if the difference between first quantity and the second quantity is arranged to differ in a completely random way, the difference may be zero, although this unlikely.

Because according the invention, the daily quantity of the nutrient released to the user (and thus used by the human or animal user) differs arbitrarily between the first nutrition portion and the second nutrition portion, the equilibrium of chemical reactions in the human or animal body is not at a stable position. This is the case when the nutrition portions are used to supplement normal nutrition as the quantity of nutrients in normal nutrition also varies. This is also the case when the nutrition portions are used to replace meals such as in astronauts' pills, baby food and diet meal replacements. Therefore using the example of the previously mentioned reaction, the human or animal body does not produce the same amount of chemical D via the reaction indicated above using nutrient A as would have been the case when using prior art supplements with a quantity that does not change between days. Therefore the organ which produces chemical D faces varying demands to get to the concentration of chemical D and the human or animal body will arrange that the organ will be able to vary its output between high and low quantities. This facilitates the human or animal body to adapt to the demanded action.

The skilled person will appreciate that the first and second nutrition portions for instance are in the form of tablets. Alternatively, the first and second nutrition portions may for instance be in the form of caplets, (gelatine) capsules, or quantities of elixir, solution, suspension, quantities of a powder or quantities of a liquid suitable for drinking.

According to a further embodiment of the invention, the method comprises the steps of

- determining a desired total quantity of the nutrient in the plurality of daily nutrition portions; and
- determining the first quantity in an arbitrary way from a range of quantities;
- arranging that the total quantity of the nutrient in the plurality of daily nutrition portions equals the desired total quantity by determining the second quantity based on the difference between the desired total quantity and the first quantity.

By determining the second quantity based on the difference between the desired total quantity and the first quantity, the difference between the first quantity and the second quantity is determined in an arbitrary way, because

- the first quantity is determined in an arbitrary way; and
- the desired total quantity is determined before determining the second quantity.

In an advantageous embodiment, by first determining the desired total quantity to be equal to or lower than the product of an allowed maximum daily quantity and the number of daily nutrition portions in the plurality of daily nutrition portions, the method can be arranged to provide the user with a quantity that on average does not exceed an allowed maximum quantity.

According to a further embodiment of the invention, determining the first quantity in an arbitrary way comprises determining the first quantity using a random process.

Because the first quantity is determined by a random process, the first quantity is arbitrary.

According to a further embodiment of the invention, the random process is maximized to a value in a range having the maximum allowed daily quantity as an upper limit.

Because the random process limits the first quantity to be within a limited range, the user is protected from too large variations in the quantity.

According to a further embodiment of the invention determining the first quantity in an arbitrary way comprises determining the first quantity using a pseudo random process.

By using a pseudo random process, the first quantity has a known upper limit and a known lower limit. Therefore, the user can easily be protected by the method against an overdose of the nutrient.

In addition, it is easy to implement pseudo-random processes by programming and such pseudo-random processes can easily be altered or restarted. Being able to restart the process is advantageous in order to establish a stable production.

According to a further embodiment of the invention, the method comprises,

- selecting a further first quantity and a further second quantity, the further first quantity differing from the further second quantity;
- producing the plurality of daily nutrition portions wherein the plurality of nutrition portions comprises at least one further first nutrition portion comprising the further first quantity and comprises at least one further second nutrition portion comprising the further second quantity;

wherein subsequently releasing the first nutrition portion comprises releasing an arbitrary nutrition portion from the plurality of nutrition portions as the first nutrition portion.

Because the further first quantity and the further quantity are selected such that they differ from each other, the further first nutrition portion has a different quantity of the nutrient than the further second nutrition portion. Because in addition the further first nutrition portion and the further second nutrition portion are comprised by the plurality of nutrition portions and an arbitrary nutrition portion of the plurality of nutrition portions is selected as the first nutrition portion, the difference between the first nutrition portion and the second nutrition portion is arbitrary.

According to a further embodiment of the invention, the method comprises the step of limiting the quantity of the nutrient for each nutrition portion of the plurality of daily nutrition portions to a range having a maximum value.

By limiting the quantities with a maximum value, providing a user with an overdose can be prevented.

According to a further embodiment of the invention, releasing a nutrition portion as the first nutrition portion in an arbitrary way comprises placing the plurality of daily nutrition portions in a reservoir and releasing an arbitrary nutrition portion from the reservoir as the first nutrition portion.

By releasing an arbitrary nutrition portion from a reservoir as the first nutrition portion, the first quantity is arbitrary. Therefore the difference between the quantity in the first nutrition portion and the second nutrition portion is arbitrary.

According to a further embodiment of the invention, the method comprises marking each nutrition portion of the plurality of daily nutrition portions with a label and storing the first quantity and the second quantity together with a reference to the labels such that each label corresponds to a unique quantity.

Because each nutrition portion is marked using the labels and the corresponding quantities are stored with reference to the labels and because each label corresponds to a unique quantity of the nutrient, the nutrient provided to the user can be traced back if so desired based on the label.

According to a further embodiment of the invention, releasing an arbitrary nutrition portion from the reservoir as the first nutrition portion comprises placing the first nutrition portion in a well of a blister pack.

By placing the first nutrition portion in a well of a blister pack, the blister pack can be filled such that the quantities vary in an arbitrary way. Even when orderly releasing nutrition portions from the blister pack, the user will be presented with quantities of the nutrient that vary in an arbitrary way.

According to a further embodiment of the invention, releasing an arbitrary nutrition portion from the reservoir as the first nutrition portion comprises releasing the nutrition portion to a user for direct use.

This embodiment is advantageous as it provides a simple and straightforward way to present the user with quantities of the nutrient that vary in an arbitrary way.

According to a further embodiment of the invention, the first nutrition portion comprises a first additional quantity of an additional nutrient and the second nutrition portion comprises a second additional quantity of the additional nutrient; and comprising the step of

- arranging that the first additional quantity and the second additional quantity differ in an arbitrary way and independently of the step of arranging that the first quantity and the second quantity differ in an arbitrary way.

The inventors realised that it would be even better to have the quantity of other nutrients (the additional nutrient) differ on a daily basis as well, but with a difference that does not depend on the difference of the nutrient. This further contributes to keep the equilibrium of even more chemical reactions in the body of a human or an animal, such as a mammal unstable and may even contribute to destabilising the equilibrium of the reactions in which the nutrient is involved.

It is a further object of the invention, to provide a packaging product that supports the release of daily nutrition portions to a user in such a way that it improves the variation in the quantity of the nutrient used per day for the human or animal body.

According to a further aspect of the invention there is provided a packaging product produced by the method of any of the claims 1 to 12.

Embodiments of the invention will now be described by way of example only, with reference to the accompanying schematic drawings in which corresponding symbols indicate corresponding parts.

Figures

- Figure 1 depicts a flask with a number of tablets according to the invention
- Figure 2 depicts a blister pack according to the invention

Description

As used herein, "nutrient" encompasses without limitation vitamins, minerals, carbohydrates (including sugar), amino acids, fatty acids, proteins and fibres.

"Dose" refers to a quantity.

"Day indicium" encompasses without limitation indicators for a specific day of the week such as Monday, Tuesday, Wednesday, Thursday, Friday, Saturday or Sunday or an abbreviation of said day, a specific date or a general succession of days such as day 1, day 2, day 3 and the like. Day indicia may be indicate directly on the nutrition portions or for instance on a lid portion of a blister pack.

"Pseudorandom" herein refers to an outcome of a process for generating a number that appears to be random, but is generated by a deterministic causal process. By restarting the process, the process provides the same output.

"Tablets" encompass without limitation chewable or quick dissolvable tablets.

"Well" of a blister pack herein refers to any shape of recessed portion capable of containing a nutrition portion.

In a first example according to the invention a method is used to fill a blister pack with nutrition portions with doses (i.e. quantity) of a nutrient, in this case vitamin B1. The process comprises determining the doses in an arbitrary way.

At first a desired average relative quantity is determined for instance to be 85% of an advised daily quantity. The number of daily nutrition portions is selected to be 10, which means that the desired total quantity is determined as well.

The nutrition portions are in the form of tablets and are supposed to complement daily meals, which may or may not complement the daily used quantity to 100% of the advised daily quantity. Each tablet corresponds to a nutrition portion. Per day, one tablet is to be used, as is also written in the user manual. The tablets can be swallowed.

In the method a maximum of 200% of the advised daily quantity is maintained as the maximum allowed daily quantity by governmental regulations.

In a range with endpoints 0 and 200 there are 9 numbers (see the first 9 relative doses in table 1) randomly selected according to the method and the 9 numbers are selected from a list of numbers comprising all integer multiples of 5 (including the end points) in the range. Each of the 9 numbers is selected using a random process. This way, the 9 numbers are determined arbitrarily.

Then the total relative dose of those 9 relative doses is determined by adding the 9 relative doses. That total relative dose is subtracted from the desired total relative dose of 10 days, being equal to 10 times 85%, the subtraction leading to a remainder. Then the tenth dose is determined to be equal to the remainder, here 50%. In this way the average dose is 85%.

**Table 1**

| Nutrition portion number | Relative dose [%] |
|---|---|
| 1 | 0 |
| 2 | 75 |
| 3 | 150 |
| 4 | 10 |
| 5 | 20 |
| 6 | 90 |
| 7 | 170 |
| 8 | 200 |
| 9 | 85 |
| 10 | 50 |

In addition, the nutrition portions also comprise a varying dose of an additional nutrient, such as vitamin C. The same relative quantities are used as for the nutrient, but the order of the relative quantities is randomized for the additional nutrient with respect to the relative quantities for the nutrient. The outcome of the randomization is 150,10,20,90,170,200,85,50,0,75. The quantity of the additional nutrient in nutrition portion 1, the first additional quantity of the additional nutrient therefore is 150% of the daily advised quantity for the additional nutrient. The quantity of the additional nutrient in nutrition portion 2, the second additional quantity of the additional nutrient therefore is 10% of the daily advised quantity for the additional nutrient.

Thus nutrition portion 1 has a relative quantity of 0% of the nutrient (vitamin B) and 150 % of the additional nutrient (vitamin C). The skilled man will understand that the relative quantities of the additional nutrient may also be established by using a further process to determine the values and the order of the relative quantities of the additional nutrient. In both cases (i.e. randomization of the relative quantities and using a further process) arranging that the first additional quantity and the second additional quantity differ in an arbitrary way is independent of the step of arranging that the first quantity and the second quantity differ in an arbitrary way.

The daily nutrition portions are each individually placed in a well of the blister pack in the order in which the relative quantities are selected (see table 1).

The blister pack comprises day indicia indicating day 1, day 2 etc. at the nutrition portions.

In the daily nutrition portions, the quantity may differ either by a different concentration of the nutrient (vitamin B1) or by the varying volume of mass of the nutrition portion.

The blister pack is the product of a method comprising filling blister packs at a filling station of a production line. The filling station comprises positioning means to position the blister packs one by one relative to a supply of daily nutrition portions. The supply arranges that the wells of the blister pack, which is in position relative to the supply, be filled with tablets.

The supply may have ten temporary storage areas for each of the ten different relative doses. The skilled man will appreciate that different relative doses correspond to different doses. The ten temporary storage areas may be filled by a single tablet production line of which the settings are varied on purpose to vary the quantity of the nutrient.

Alternatively, the ten temporary storage areas may be filled with tablets from ten different corresponding tablet production lines that are similar, but have been arranged to produce tablets with different relative doses according to table 1. For instance the first tablet production line produces tablets with a relative dose of 0%, the second production line produces tablets with a relative dose of 75% etc.

The supply may alternatively be connected to a single tablet production line that continuously feeds the supply with the tablets whereby the quantity of the nutrient (vitamin B1) in the tablets cycles as indicated in table 1.

The supply and the positioning means work together such that the first well is filled with a tablet from a first temporary storage area, the second well with a tablet from a second temporary storage area and so on. When all the wells of the blister pack are occupied by a tablet, the positioning means transport the blister pack away from the supply and position another, empty blister pack relative to the supply. The filled blister pack is transported to a closing station where the blister pack is sealed with a removable seal.

The wells may already have day indicia before being filled or after being filled. The day indicia may be on the top layer.

Although the packing method may end here in other examples, in this example the blister is transported to a boxing station (preferably after sealing the blister) where the blister is placed in a cardboard box together with for instance 2 or 4 further blister packs from the production line. An indication is printed on the cardboard box to use one nutrition portion per day. The blister packs in the box are equal, i.e. the relative dose of the nutrition portion with indicium day 1 of a first blister pack from the cardboard box is equal to the relative dose of the nutrition portion with indicium day 1 of a second blister pack from the cardboard box. The packing method may end here, or the cardboard boxes may be further packed into larger packaging products for shipping etcetera. For a user of the blisters packs, by first using all the nutrition portions from one blister pack and then continuing on another blister pack, the quantities of the nutrient vary in a cyclically.

By releasing the tablets from a blister pack, the tablets (that can be swallowed) are ready for direct use, i.e. no further step needs to be taken for the use of the nutrition portions.

A printout of the relative dose and the corresponding quantity per day indicium is included in the box. The printout also mentions the additional quantities (and corresponding additional relative doses) of the additional nutrient per day indicium.

In a variant of the example, the desired average relative dose to be packed and released to a user is selected to be 100% and that all relative doses (i.e. quantities) with a step of 20% should be present. Thus the relative quantities are 0,20,40,60,80,100,120,140,160, 180 and 200. A random generator is used to randomize the sequence of the relative doses. By selecting the desired average relative dose and the selecting the relative quantities, the desired total quantity is determined as well.

The blister pack is filled from 11 temporary storage areas each comprising nutrition portions corresponding uniquely to one of the relative quantities.

Alternatively the blister pack is filled from one line producing nutrition portions wherein the relative quantity of the nutrient (vitamin B1) cycles according the outcome of the randomisation of the sequence.

In yet another variant of the first example, again the blister is filled with 10 daily nutrition portions. The quantity of a nutrient, here vitamin B1, is determined using a pseudorandom generator producing numbers in the interval [0,1] (i.e. it ranges from 0 to 1 and includes the end points). The numbers are produced with 2 decimals.

The 9 numbers from the pseudorandom generator are 0.81, 0.12, 0.78, 0.31, 0.75, 0.41, 0.34, 0.34 and 0.7.

The numbers are each multiplied by 200 to give a relative percentage of the advised daily quantity. Thereby the sequence 162,24,156,62,150,82,68,68,140 is derived. The total of the relative percentages is calculated from the sequence; it is 91.2%. The desired average daily quantity is determined by selection to be 95%. Therefore it is computed that the relative quantity in the final nutrition portion should be 38%.

The blister pack is filled in a similar way as described above for the first example.

In a second example of the invention, 21 daily nutrition portions are produced with an increasing relative quantity of vitamin B1, which is a nutrient. The daily nutrition portions are in the form of tablets. A desired total quantity of the nutrient for the 21 daily nutrition portions is determined. The production facility producing the nutrition portions is arranged such that the lowest relative quantity is 0% and the highest relative quantity is 200% of the advised daily relative quantity, which corresponds to the maximum allowed relative daily quantity. At the same time the lowest relative quantity is zero, so that a variation is obtained over the largest possible range.

The relative quantity increases by 10% between the 21 nutrition portions and each tablet has a unique dose. As there are 21 tablets, the average relative quantity is 100% of the advised daily dose. The number of tablets and the steps in the relative dose are set in the machinery producing the tablets including the start point of 0% relative quantity.

Each tablet is marked with a unique number between zero and twenty two as day indicium where 1 stands for the lowest relative quantity and 21 stands for the highest relative quantity.

A reservoir is filled with 21 tablets wherein each tablet corresponds to a nutrition portion.

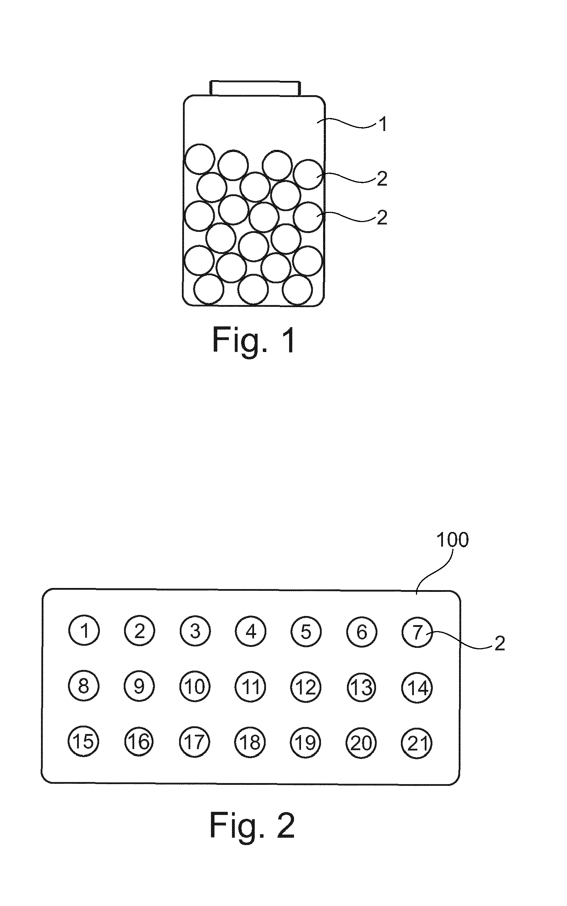

Figure 1 shows the reservoir (1) in the form of a flask (1) with the screw cap removed. After filling, the flask is removed from the production line to find its way to the home of a user. Per day, one tablet (2) is to be used, as is also written in the user manual.

The nutrition portions, i.e. the tablets are spherical.

As the nutrition portions, i.e. the tablets, are in an open space of the flask, they have a random position in the flask. The order in which the nutrition portions are removed from the flask is random because of the random position in the flask. In order to have a tablet roll out of the flask (i.e. for releasing a nutrition portion) the flask needs to be rotated such that the opening is turned downward, which makes the tablets move relative to each other in an uncontrolled way and this aids in making that the tablets are released in an arbitrary order.

Because of the arbitrary order, the tablets come out of the flask in such an order that the marks increase or decrease at random.

For instance the tablet with the mark 5 forms a further first tablet comprising a further first quantity vitamin of B1. The tablet with the mark 20 forms a further second tablet comprising a further second quantity vitamin of B1.

For instance the first tablet that comes out may be the further first tablet (tablet 5) and the second tablet that comes out, may be the second further tablet (tablet 20). It may because of the random order in which the tablets are released from the flash however also be in reverse order, or other tablets may be released in between. Hence the difference between the quantity of the first tablet and the second tablet is arbitrary.

A sticker on the flask indicates the quantities of the nutrient per unique number used to mark the tablets.

In a third example, the process deviates from the process in the second example in that the 21 tablets (2) are collected in a reservoir in the production line and the reservoir releases the tablets in random order to a filling station of the production line that fills wells of a blister pack (100) with the tablets row by row (see figure 2). The order in which the wells of the blister pack (100) are filled is the same as the indications on the blister pack (100). The indications on the blister pack (100) are numbers, ranging from 1 to 21 as shown in figure 2. The blister pack (100) is accompanied by a print of the quantities of the nutrient and the corresponding numbers with which the tablets are marked. The blisters are send through a distribution network (for instance comprising a drugstore) to a user. By releasing a nutrition portion (2) from the blister pack (100), the nutrition portion (which has the form of a tablet) is release for direct use as the tablet can be swallowed.

While specific examples of the invention have been described, it will be appreciated by the person skilled in the art that the invention may be practised otherwise than as described, but still according to the teachings of the invention. This is because the description is intended to be illustrative.

For instance, the nutrition portions can be for animals or for humans.

**Claims**

1.  Method of providing a plurality of daily nutrition portions to a user comprising the steps of:

    - packing a first nutrition portion comprising a first quantity of a nutrient;
    - packing a second nutrition portion comprising a second quantity of the nutrient;
    - subsequently releasing the first nutrition portion and the second nutrition portion;
    - **characterized by** arranging that the first quantity and the second quantity differ in an arbitrary way.

2.  Method according to claim 1 comprising the steps of

- determining a desired total quantity of the nutrient in the plurality of daily nutrition portions; and
- determining the first quantity in an arbitrary way from a range of quantities;
- arranging that the total quantity of the nutrient in the plurality of daily nutrition portions equals the desired total quantity by determining the second quantity based on the difference between the desired total quantity and the first quantity.

3. Method according to claim 2, wherein determining the first quantity in an arbitrary way comprises determining the first quantity using a random process.

4. Method according to claim 3, wherein the random process is maximized to a value in a range having the maximum allowed daily quantity as an upper limit.

5. Method according to claim 2, wherein determining the first quantity in an arbitrary way comprises determining the first quantity using a pseudo random process.

6. Method according to claim 1,2,3,4 or 5, comprising,

- selecting a further first quantity and a further second quantity, the further first quantity differing from the further second quantity;
- producing the plurality of daily nutrition portions wherein the plurality of nutrition portions comprises at least one further first nutrition portion comprising the further first quantity and comprises at least one further second nutrition portion comprising the further second quantity;

wherein subsequently releasing the first nutrition portion comprises releasing an arbitrary nutrition portion from the plurality of nutrition portions as the first nutrition portion.

7. Method according to claim 6, comprising the step of limiting the quantity of the nutrient for each nutrition portion of the plurality of daily nutrition portions to a range having a maximum value.

8. Method according to claim 6 or 7, wherein releasing a nutrition portion as the first nutrition portion in an arbitrary way comprises placing the plurality of daily nutrition portions in a reservoir and releasing an arbitrary nutrition portion from the reservoir as the first nutrition portion.

9. Method according to claim 8, comprising marking each nutrition portion of the plurality of daily nutrition portions with a label and storing the quantity of the nutrient corresponding to the nutrition portion with the label such that each label corresponds to a unique quantity of the nutrient..

10. Method according to claim 8 or 9, wherein releasing an arbitrary nutrition portion from the reservoir as the first nutrition portion comprises placing the first nutrition portion in a well of a blister pack.

11. Method according to claim 8 or 9, wherein releasing an arbitrary nutrition portion from the reservoir as the first nutrition portion comprises releasing the nutrition portion to a user for direct use.

12. Method according to any of the claims 1 to 11, wherein the first nutrition portion comprises a first additional quantity of an additional nutrient and the second nutrition portion comprises a second additional quantity of the additional nutrient; and comprising the step of

- arranging that the first additional quantity and the second additional quantity differ in an arbitrary way and independently of the step of arranging that the first quantity and the second quantity differ in an arbitrary way.

13. Packaging product produced by the method of any of the claims 1 to 12.

Fig. 1

Fig. 2

Europäisches
Patentamt

European
Patent Office

Office européen
des brevets

## EUROPEAN SEARCH REPORT

Application Number

EP 14 17 5052

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/228191 A1 (YUN ANTHONY JOONKYOO [US] ET AL) 13 September 2012 (2012-09-13) * paragraphs [0011], [0012], [0022] - [0045], [0049] - [0052]; claims 1-3,8-10; figures 5,6 * | 1-13 | INV. A23L1/29 B65D75/32 A61J1/03 G09B19/00 |
| X | US 2012/228176 A1 (YUN ANTHONY JOONKYOO [US] ET AL) 13 September 2012 (2012-09-13) * paragraphs [0001] - [0012], [0020] - [0049]; claims 1-3,10 * | 1-13 | |
| X,D | EP 1 207 850 A1 (DRUGTECH CORP [US]) 29 May 2002 (2002-05-29) * paragraphs [0001], [0003], [0029], [0040], [0077] - [0079]; claims 1,2,8,15; figures 1,3,4,8 * | 1-13 | |
| X | US 2013/261183 A1 (BHAGAT URVASHI [US]) 3 October 2013 (2013-10-03) * claims 53,54,62,75; examples 1-5 * | 1-9, 11-13 | |
| X | CA 2 343 644 A1 (WINCHUR MATTHEW JAMES [CA]) 14 October 2001 (2001-10-14) * claims 1,2,6,9 * | 1-13 | TECHNICAL FIELDS SEARCHED (IPC) A23L B65D A61J G09B |
| X | EP 1 360 957 A1 (LAZAREV MIKHAIL IVANOVICH [RU]; YENILEYEV RUSTAM KHALILOVICH [RU]) 12 November 2003 (2003-11-12) * paragraphs [0006], [0007], [0013], [0024]; claims 1,3,4,15 * | 1-13 | |
| X | WO 2009/020595 A2 (SHAKLEE CORP [US]; CHANG KUEI-TU [US]; SMIDT CARSTEN R [US]; CASTILLO) 12 February 2009 (2009-02-12) * page 9, line 7 - page 20, line 31; claims 1,7,8 * | 1-13 | |

-/--

The present search report has been drawn up for all claims

| Place of search | Date of completion of the search | Examiner |
|---|---|---|
| The Hague | 6 January 2015 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 14 17 5052 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/040018 A1 (THIERMAN JONATHAN S [US] ET AL) 16 February 2012 (2012-02-16) * paragraphs [0020] - [0024]; claims 1-11 * | 1-8, 11-13 | |
| A | US 2013/248551 A1 (TIGNANELLI JASON S [US] ET AL) 26 September 2013 (2013-09-26) * paragraphs [0002], [0012], [0013]; claims 1,9 * | 1-13 | |
| A | WO 2006/019760 A1 (GPC BIOTECH INC [US]; KULKARNI SHIRISHKUMAR B [US]; SHAH HEMANSHU S [U) 23 February 2006 (2006-02-23) * claims 1,6,18 * | 1-13 | |

TECHNICAL FIELDS SEARCHED (IPC)

The present search report has been drawn up for all claims

| Place of search | Date of completion of the search | Examiner |
|---|---|---|
| The Hague | 6 January 2015 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 14 17 5052

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2015

| Patent document cited in search report | | Publication date | Patent family member(s) | | Publication date |
|---|---|---|---|---|---|
| US 2012228191 | A1 | 13-09-2012 | NONE | | |
| US 2012228176 | A1 | 13-09-2012 | NONE | | |
| EP 1207850 | A1 | 29-05-2002 | AT | 411794 T | 15-11-2008 |
| | | | AU | 780297 B2 | 17-03-2005 |
| | | | AU | 5780100 A | 13-02-2001 |
| | | | BR | 0013173 A | 02-04-2002 |
| | | | CA | 2378378 A1 | 21-02-2001 |
| | | | DE | 1207850 T1 | 09-01-2003 |
| | | | EP | 1207850 A1 | 29-05-2002 |
| | | | ES | 2182729 T1 | 16-03-2003 |
| | | | JP | 2003505154 A | 12-02-2003 |
| | | | MX | PA02000806 A | 22-07-2002 |
| | | | US | 6375956 B1 | 23-04-2002 |
| | | | WO | 0107012 A1 | 01-02-2001 |
| US 2013261183 | A1 | 03-10-2013 | AU | 2011315835 A1 | 02-05-2013 |
| | | | CA | 2814053 A1 | 19-04-2012 |
| | | | CN | 103260437 A | 21-08-2013 |
| | | | CO | 6700861 A2 | 28-06-2013 |
| | | | EA | 201390438 A1 | 29-11-2013 |
| | | | EP | 2627197 A2 | 21-08-2013 |
| | | | JP | 2013541108 A | 07-11-2013 |
| | | | KR | 20130140715 A | 24-12-2013 |
| | | | SG | 189855 A1 | 28-06-2013 |
| | | | US | 2013261183 A1 | 03-10-2013 |
| | | | WO | 2012051591 A2 | 19-04-2012 |
| CA 2343644 | A1 | 14-10-2001 | NONE | | |
| EP 1360957 | A1 | 12-11-2003 | AT | 541559 T | 15-02-2012 |
| | | | EP | 1360957 A1 | 12-11-2003 |
| | | | ES | 2380746 T3 | 18-05-2012 |
| | | | JP | 4248243 B2 | 02-04-2009 |
| | | | JP | 2004527481 A | 09-09-2004 |
| | | | KR | 20030082568 A | 22-10-2003 |
| | | | RU | 2195269 C2 | 27-12-2002 |
| | | | US | 2004096522 A1 | 20-05-2004 |
| | | | US | 2006127499 A1 | 15-06-2006 |
| | | | WO | 02064111 A1 | 22-08-2002 |
| WO 2009020595 | A2 | 12-02-2009 | CA | 2695366 A1 | 12-02-2009 |
| | | | CN | 101815509 A | 25-08-2010 |
| | | | JP | 2010535767 A | 25-11-2010 |
| | | | TW | 200908892 A | 01-03-2009 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 14 17 5052

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2015

| Patent document cited in search report | | | Publication date | Patent family member(s) | | Publication date |
|---|---|---|---|---|---|---|
| | | | | US | 2010143533 A1 | 10-06-2010 |
| | | | | US | 2014178347 A1 | 26-06-2014 |
| | | | | WO | 2009020595 A2 | 12-02-2009 |
| | | | | WO | 2009035496 A1 | 19-03-2009 |
| US 2012040018 | A1 | 16-02-2012 | | US | 2012040018 A1 | 16-02-2012 |
| | | | | US | 2014345234 A1 | 27-11-2014 |
| | | | | US | 2014348962 A1 | 27-11-2014 |
| US 2013248551 | A1 | 26-09-2013 | | NONE | | |
| WO 2006019760 | A1 | 23-02-2006 | | AU | 2005275205 A1 | 23-02-2006 |
| | | | | CA | 2573762 A1 | 23-02-2006 |
| | | | | EP | 1781230 A1 | 09-05-2007 |
| | | | | JP | 2008506463 A | 06-03-2008 |
| | | | | US | 2008272022 A1 | 06-11-2008 |
| | | | | WO | 2006019760 A1 | 23-02-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1207850 A